# EUROPÄISCHE PATENTSCHRIFT

(11) **EP 4 648 978 B1**
(45) Veröffentlichungstag und Bekanntmachung des Hinweises auf die Patenterteilung: **02.12.2026**
(21) Anmeldenummer: 23840896.7
(22) Anmeldetag: 18.12.2023
(51) Int. Cl.: B60C 9/22, B60C 11/00, B60C 11/03, B60C 15/06, B60C 19/08

(54) **FAHRZEUGLUFTREIFEN**
PNEUMATIC VEHICLE TIRE
PNEUMATIQUE DE VÉHICULE

(30) Priorität: 11.01.2023 DE 102023200172
(43) Veröffentlichungstag der Anmeldung: 19.11.2025
(73) Patentinhaber: Continental Reifen Deutschland GmbH, 30175 Hannover (DE)
(72) Erfinder: ÖZÜDURU, Ahmet, 30175 Hannover (DE)
(74) Vertreter: Continental Corporation
(86) Internationale Anmeldenummer: PCT/DE2023/200261
(87) Internationale Veröffentlichungsnummer: WO 2024/149424

(56) Entgegenhaltungen:
- EP-A1- 2 193 939
- JP-A- 2009 006 975
- JP-A- 2013 220 763

## Beschreibung

Die Erfindung betrifft einen Fahrzeugluftreifen mit einem profilierten Laufstreifen, Gürtellagen mit einer elektrisch nicht leitenden Gürtelgummierung, einer Karkasseinlage und Seitenwänden, welche aus elektrisch nicht leitendem Gummimaterial bestehen und jeweils einen zwischen die Karkasseinlage und die radial innerste Gürtellage hineinragenden, radial äußeren Wandabschnitt aufweisen,
- wobei der Laufstreifen eine radial innerste Laufstreifenschicht und zumindest eine weitere Laufstreifenschicht aus elektrisch nicht leitendem Gummimaterial umfasst, wobei die weitere(n) Laufstreifenschicht(en) in radialer Richtung von zumindest einem zur Laufstreifenaußenfläche reichenden, elektrisch leitenden Laufstreifenelement durchsetzt ist bzw. sind,
- wobei das elektrisch leitende Laufstreifenelement über zumindest ein erstes elektrisch leitendes Element und zumindest ein das erste elektrisch leitende Element kontaktierendes, zweites elektrisch leitendes Element mit einer elektrisch leitenden Seitenwandpassage, welche bei auf einer Felge montiertem Fahrzeugluftreifen die Felge kontaktiert, in Verbindung steht,
- wobei das erste elektrisch leitende Element das elektrisch leitende Laufstreifenelement kontaktiert und radial außerhalb der Gürtellagen sowie über die Gürtelkanten verläuft und
- wobei das zweite elektrisch leitende Element zwischen dem radial äußeren Wandabschnitt der Seitenwand und der radial innersten Gürtellage verläuft.

Fahrzeugluftreifen, welche Seitenwände mit radial äußeren Wandabschnitten aufweisen, die in den Bereich zwischen die Karkasseinlage und dem Gürtelverband hineinragen, sind als Fahrzeugluftreifen mit sogenannter "SUB-Konstruktion" bekannt, wobei SUB für "sidewall under belt" steht. Fahrzeugluftreifen mit SUB-Konstruktion haben sich im Hinblick auf die Reifenhaltbarkeit, insbesondere unter hoher Last, als vorteilhaft erwiesen. Dies liegt vor allem daran, dass die unter den Gürtelverband reichenden Seitenwände eine "Polsterungsfunktion" übernehmen, also eine Funktion ähnlich einem Schulter- bzw. Gürtelkantenpolster aufweisen. Die SUB-Konstruktion kann insbesondere dazu beitragen, die beim Fahren auftretenden Scherspannungen im Bereich der Gürtelkanten zu reduzieren, sodass sich die mechanische Rissanfälligkeit in den Schulterbereichen vorteilhafter Weise reduzieren lässt.

Ein Fahrzeugluftreifen der eingangs genannten Art ist beispielsweise aus der EP 3 680 114 A1 bekannt. Der Fahrzeugluftreifen weist Gürtellagen mit einer elektrisch nicht leitenden Gürtelgummierung, eine elektrisch leitende Gürtelbandage (erstes elektrisch leitendes Element), Seitenwände aus elektrisch nicht leitendem Gummimaterial, einen von einem elektrisch leitenden Laufstreifenelement durchsetzen Laufstreifen und eine elektrisch leitende Seitenwandpassage auf. In zumindest einer Reifenschulter ist zwischen dem radial äußeren Wandabschnitt der Seitenwand und der radial innersten Gürtellage zumindest ein elektrisch leitender Gummistreifen (zweites elektrisch leitendes Element) eingebaut, welcher mit der elektrisch leitenden Gürtelbandage und der elektrische leitenden Seitenwandpassage in Verbindung steht. Gemäß einem Ausführungsbeispiel weist die Gürtelbandage eine elektrisch nicht leitende Bandagengummierung auf und ist mit einer Anzahl von elektrisch leitenden Fäden versehen, welche die elektrische Leitfähigkeit der Gürtelbandage (erstes elektrisch leitendes Element) sicherstellen. Durch den gebildeten Ableitweg lassen sich entsprechende Reifenbauteile aus kieselsäurehaltigen Kautschukmischungen fertigen, wodurch der Rollwiderstand reduziert ist.

Dokumente JP 2013 220763 A und EP 2 193 939 A1 offenbaren ebenfalls Fahrzeugluftreifen, die hilfreich sind, um die Erfindung zu verstehen, mit unterschiedlichen Ansätzen, einen elektrischen Pfad von der Felge zum Laufstreifen zu realisieren.

Gesetzliche Vorgaben machen es erforderlich, weitere Maßnahmen aufzufinden, mit welchen sich der Rollwiderstand von Fahrzeugluftreifen noch weiter reduzieren lässt.

Der Erfindung liegt daher die Aufgabe zugrunde, einen Fahrzeugluftreifen der eingangs genannten Art unter Aufrechterhaltung des erforderlichen Ableitweges im Hinblick auf den Rollwiderstand weiter zu verbessern.

Gelöst wird die gestellte Aufgabe erfindungsgemäß dadurch, dass das erste elektrisch leitende Element ein aus elektrisch leitendem Gummimaterial bestehender randseitiger Schichtteil der radial innersten Laufstreifenschicht ist.

An der Ableitung elektrostatischer Aufladungen ist somit ein randseitiger Schichtteil der radial innersten Laufstreifenschicht beteiligt, sodass hauptsächlich Gummimaterial verbaut werden kann, welches einen besonders geringen Rollwiderstand des Reifens unterstützt.

Gemäß einer bevorzugten Ausführung weist das elektrisch leitende Laufstreifenelement zum nächstliegenden seitlichen Rand der Bodenaufstandsfläche einen auf die Laufstreifenperipherie bezogenen, in axialer Richtung ermittelten Abstand von 10,0 mm bis 60,0 mm, insbesondere von 20,0 mm bis 40,0 mm, besonders bevorzugt von 25,0 mm bis 35,0 mm, auf. Der randseitige Schichtteil der radial innersten Laufstreifenschicht lässt sich somit relativ kurz ausführen, was im Hinblick auf den Rollwiderstand günstig ist.

Gemäß einer weiteren bevorzugten Ausführung weist der Laufstreifen zumindest eine schulterseitige Profilrippe auf, welche vom elektrisch leitenden Laufstreifenelement durchsetzt ist.

Eine im Hinblick auf den Rollwiderstand vorteilhafte Variante der letztgenannten bevorzugten Ausführung sieht vor, dass sich der randseitige Schichtteil der radial innersten Laufstreifenschicht ausschließlich im Bereich der schulterseitigen Profilrippe befindet.

Bevorzugter Weise weist die schulterseitige Profilrippe innerhalb der Bodenaufstandsfläche des Laufstreifens eine in axialer Richtung ermittelte Breite von 15% bis 25% der Breite der Bodenaufstandsfläche des Laufstreifens auf.

Eine weitere bevorzugte Ausführung ist dadurch gekennzeichnet, dass der randseitige Schichtteil der radial innersten Laufstreifenschicht in Richtung Reifenäquatorialebene am elektrisch leitenden Laufstreifenelement bzw. an den elektrisch leitenden Laufstreifenelementen endet. Auch diese Maßnahme trägt zu einem geringen Rollwiderstand bei.

Bevorzugter Weise befindet sich die Profilierung des Laufstreifens ausschließlich in der bzw. den weiteren Laufstreifenschicht(en).

Das zweite elektrisch leitende Element ist insbesondere ein Gummistreifen.

Für den Rollwiderstand des Fahrzeugluftreifens ist es von zusätzlichem Vorteil, wenn der randseitige Schichtteil der radial innersten Laufstreifenschicht und das elektrisch leitende Laufstreifenelement die einzigen elektrisch leitenden Teile des Laufstreifens sind.

Bevorzugter Weise ist die elektrische leitende Seitenwandpassage aus einer elektrisch leitenden Karkassgummierung der Karkasseinlage und einem elektrisch leitenden Hornprofil gebildet.

Bevorzugt weist der Fahrzeugluftreifen eine die Gürtellagen im Reifenquerschnitt randseitig überdeckende, elektrisch nicht leitende Gürtelbandage auf.

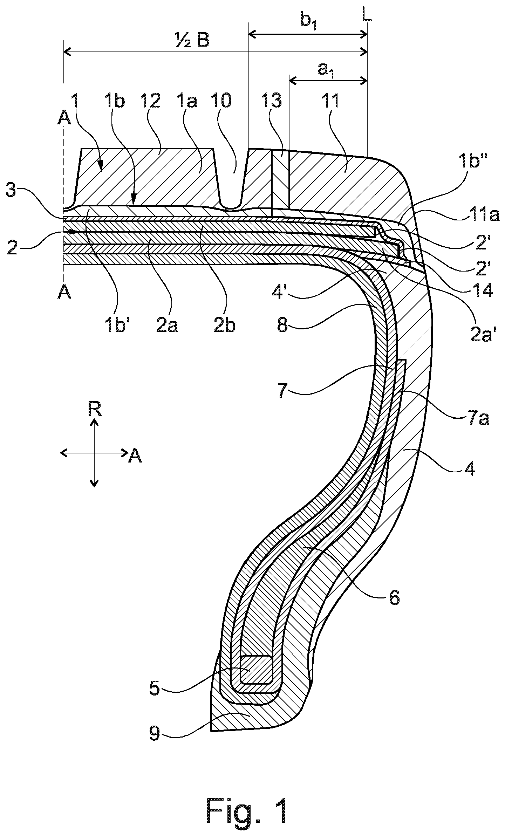

Weitere Merkmale, Vorteile und Einzelheiten der Erfindung werden nun anhand der einzigen Figur, Fig. 1, die einen Teilquerschnitt eines Fahrzeugluftreifens mit einer Ausführungsvariante der Erfindung zeigt, näher erläutert.

Gemäß der Erfindung ausgeführte Fahrzeugluftreifen sind Reifen in Radialbauart, insbesondere für Personenkraftwagen (PKWs), Vans (Transporter) oder SUVs sowie vorzugsweise für Felgen mit einem ganzzahligen Felgendurchmesser von 13 Zoll bis 24 Zoll, insbesondere von 18 Zoll bis 23 Zoll.

Fig. 1 zeigt eine Hälfte eines Querschnitts eines Fahrzeugluftreifens. Der Fahrzeugluftreifen weist einen profilierten Laufstreifen 1, einen zweilagigen Gürtelverband 2, eine Gürtelbandage 3, Seitenwände 4, Wulstbereiche mit je einem Wulstkern 5 und einem Kernreiter 6, eine Karkasseinlage 7, eine luftdichte Innenschicht 8 und zwei Hornprofile 9 auf. Die nicht gezeigte Hälfte des Fahrzeugluftreifens ist vorzugsweise übereinstimmend zur gezeigten Hälfte ausgeführt.

Die Reifenäquatorialebene ist durch eine Linie A-A, die axiale Richtung durch einen Doppelpfeil A, die radiale Richtung durch einen Doppelpfeil R und der eine seitliche Rand der Bodenaufstandsfläche des Laufstreifens 1 durch eine Linie L gekennzeichnet. Die axiale Richtung ist jene Richtung, welche senkrecht zur Reifenäquatorialebene verläuft. Die radiale Richtung ist jene Richtung, welche im in axialer Richtung ausgerichteten Querschnitt betrachtet, parallel zur Reifenäquatorialebene verläuft. Die Bodenaufstandsfläche entspricht dem statisch ermittelten Footprint (ermittelt mit einem auf einer Normfelge montierten Reifen, Last bei 70 % der maximalen Tragfähigkeit, Innendruck 85 % des Normdrucks, gemäß ETRTO-Standards) und weist, im Querschnitt betrachtet, in axialer Richtung eine Breite B auf (in Fig. 1 ist B/2 eingezeichnet).

Die Karkasseinlage 7 verläuft in an sich bekannter Weise zwischen dem Gürtelverband 2 und der Innenschicht 8 sowie zwischen den Seitenwänden 4 und der Innenschicht 8 und ist von innen nach außen um die Wulstkerne 5 Karkasshochschläge 7a bildend umgeschlagen. Die Karkasseinlage 7 besteht aus einer elektrisch leitenden Karkassgummierung und in dieser eingebetteten Festigkeitsträgern.

Die Innenschicht 8 besteht aus einem elektrisch nicht leitenden Gummimaterial und ist in an sich bekannter Weise ausgeführt.

Die Hornprofile 9 bestehen aus einem elektrisch leitenden Gummimaterial, sind in an sich bekannter Weise gestaltet und kontaktieren die Karkasseinlage 7.

Der Gürtelverband 2 besteht aus einer radial inneren Gürtellage 2a und einer radial äußeren Gürtellage 2b, wobei die Gürtellagen 2a, 2b Gürtelkanten 2' aufweisen und jeweils aus in einer elektrisch nicht leitenden Gürtelgummierung eingebetteten, in jeder Gürtellage 2a, 2b parallel zueinander verlaufenden Festigkeitsträgern, beispielsweise aus Stahl- oder Textilkorden bekannter Konstruktion, bestehen, wobei die Festigkeitsträger der radial inneren Gürtellage 2a jene der radial äußeren Gürtellage 2b in insbesondere bekannter Weise kreuzen. Die radial innere Gürtellage 2a weist, im Querschnitt betrachtet, die Karkasseinlage 7 seitlich überragende, diese daher nicht kontaktierende Randabschnitte 2a' auf.

Die Gürtelbandage 3 bedeckt die Gürtellagen 2a, 2b, verläuft über die Gürtelkanten 2' der beiden Gürtellagen 2a, 2b, ist insbesondere als einlagige Spulbandage ausgeführt und besteht aus in eine elektrisch nicht leitende Bandagengummierung eingebetteten, im Allgemeinen textilen, vorzugsweise aus Nylon gefertigten, Festigkeitsträgern.

Die Seitenwände 4 ragen unter die Randabschnitte 2a' der radial inneren Gürtellage 2a hinein, sodass jede Seitenwand 4 einen zwischen dem jeweiligen Randabschnitt 2a' und der Karkasseinlage 7 auslaufenden, radial äußeren Wandabschnitt 4' aufweist. Ein Fahrzeugluftreifen, dessen Seitenwände 4 solche Wandabschnitte 4' aufweisen, wird als Fahrzeugluftreifen mit "SUB-Konstruktion" bezeichnet, wobei SUB für "sidewall under belt" steht. Die Seitenwände 4 bestehen aus elektrisch nicht leitendem Gummimaterial.

Der Laufstreifen 1 ist in radialer Richtung zweischichtig aufgebaut und setzt sich aus einer die Profilierung enthaltenden, radial äußeren Laufstreifenschicht 1a, welche üblicherweise als Laufstreifencap bezeichnet wird, und einer radial inneren Laufstreifenschicht 1b, die üblicherweise Laufstreifenbase genannt wird, zusammen. Zur Profilierung des Laufstreifens 1 gehören drei in Umfangsrichtung umlaufende, beim Ausführungsbeispiel in Draufsicht gerade verlaufende Umfangsrillen 10, welche der radial äußeren Laufstreifenschicht 1a und damit dem Laufstreifen 1 zwei schulterseitige Profilrippen 11 und zwei mittlere Profilrippen 12 verleihen. Die Profilrippen 11, 12 können in insbesondere bekannter Weise mit Rillen und/oder Einschnitten strukturiert sein. Die schulterseitigen Profilrippen 11 weisen jeweils eine zur entsprechenden Seitenwand 4 verlaufende Schulterflanke 11a und eine auf die Laufstreifenperipherie bezogene, innerhalb der Bodenaufstandsfläche sowie in axialer Richtung ermittelte, maximale Breite b₁ (Breite an der bzw. den breitesten Stelle(n)) von 15% bis 25% der Breite B der Bodenaufstandsfläche des Laufstreifens 1 auf.

Die radial äußere Laufstreifenschicht 1a besteht aus einem elektrisch nicht leitenden Gummimaterial und ist in der einen schulterseitigen Profilrippe 11, im Bereich der Bodenaufstandsfläche von zumindest einem bis zur Laufstreifenaußenfläche reichenden, elektrisch leitenden Laufstreifenelement 13 in radialer Richtung durchsetzt, wobei insbesondere ein einziges Laufstreifenelement 13 in Form eines in Umfangsrichtung umlaufenden, elektrisch leitenden Gummistreifens vorgesehen ist. Bei mehreren elektrisch leitenden Laufstreifenelementen 13 sind diese derart über den Reifenumfang verteilt angeordnet, dass sich beim Abrollen des Reifens jeweils zumindest eines der Laufstreifenelemente 13 in der Bodenaufstandsfläche befindet. Das bzw. die Laufstreifenelement(e) 13 weist bzw. weisen zum nächstliegenden seitlichen Rand der Bodenaufstandsfläche (Linie L) einen auf die Laufstreifenperipherie bezogenen, in axialer Richtung ermittelten Abstand a₁ von 10,0 mm bis 60,0 mm, insbesondere von 20,0 mm bis 40,0 mm, besonders bevorzugt von 25,0 mm bis 35,0 mm, auf.

Die radial innere Laufstreifenschicht 1b setzt sich aus einem in Umfangsrichtung umlaufenden Schichtteil 1b' und einem in Umfangsrichtung umlaufenden, ausschließlich im Bereich der einen schulterseitigen Profilrippe 11 befindlichen, randseitigen Schichtteil 1b" zusammen. Der Schichtteil 1b' besteht aus einem elektrisch nicht leitenden Gummimaterial. Der randseitige Schichtteil 1b" besteht aus einem elektrisch leitenden Gummimaterial, kontaktiert das bzw. jedes Laufstreifenelement 13, endet in Richtung Reifenäquatorialebene (Linie A-A) am bzw. an jedem Laufstreifenelement 13, läuft in Richtung Seitenwand 4 in Kontakt mit der Gürtelbandage 3 über die Gürtelkanten 2' hinaus und endet radial außerhalb der Seitenwand 4, insbesondere in Kontakt mit der Seitenwand 4, neben dem Randabschnitt 2a' der radial inneren Gürtellage 2a. Der randseitige Schichtteil 1b" ist bevorzugt derart ausgeführt, dass dieser die Schulterflanke 11a nicht mitbildet oder dass dieser einen zur Seitenwand 4 verlaufenden Endabschnitt der Schulterflanke 11a mitbildet.

Zwischen dem radial äußeren Wandabschnitt 4' der Seitenwand 4 und dem Randabschnitt 2a' der radial inneren Gürtellage 2a ist zumindest ein im Querschnitt bandartiges, elektrisch leitendes Element 14, insbesondere ein elektrisch leitender Gummistreifen, positioniert. Das elektrisch leitende Element 14 erstreckt sich über den Randabschnitt 2a', kontaktiert das radial außerhalb der Seitenwand 4 liegende Ende des schulterseitigen Schichtteils 1b und verläuft geringfügig zwischen die Karkasseinlage 7 und die radial innere Gürtellage 2a hinein. Jener Endabschnitt des elektrisch leitenden Elementes 14, welcher die Karkasseinlage 7 kontaktiert, weist in axialer Richtung eine Breite von insbesondere 5,0 mm bis 15,0 mm auf.

Die beim Fahren auftretenden elektrostatischen Aufladungen werden vom Fahrzeug, insbesondere von der Karosserie, zum jeweiligen Untergrund ("Erdung") über einen "Ableitweg", welcher von der Felge, dem Hornprofil 9, der Karkasseinlage 7, dem elektrisch leitenden Element 14, dem randseitigen Schichtteil 1b" und dem bzw. den elektrisch leitenden Laufstreifenelement(en) 13 gebildet ist, abgeleitet.

Die Erfindung ist auf das beschriebene Ausführungsbeispiel nicht beschränkt.

Es können mehrere über den Umfang des Fahrzeugluftreifens verteilt angeordnete Elemente 14 vorgesehen sein.

Die Umfangsrillen 10 können, in Draufsicht betrachtet, wellenförmig, beispielsweise in Form einer zick-zack-Welle, verlaufen.

Beim beschriebenen Ausführungsbeispiel bildet die Karkasseinlage 7 mit der elektrisch leitenden Karkassgummierung gemeinsam mit dem jeweiligen Hornprofil 9 aus elektrisch leitendem Gummimaterial im Bereich jeder Seitenwand 4 eine elektrisch leitende Seitenwandpassage, welche bei auf der Felge montierten Fahrzeugluftreifen in elektrisch leitender Verbindung mit der Felge steht und das elektrisch leitende Element 14 kontaktiert. Die elektrisch leitende Seitenwandpassage kann auch ohne elektrisch leitende Karkasseinlage und/oder ohne elektrisch leitendes Hornprofil realisiert werden, beispielsweise durch elektrisch leitende Fäden, welche auf der Karkasseinlage und/oder auf der Innenseite der Seitenwand und des Hornprofils aufgebracht sind, wie es beispielsweise aus der DE 10 2010 017 444 A1 bzw. der WO 2017/088994 A1 bekannt ist. Die elektrisch leitende Seitenwandpassage kann ferner von einer im Zuge der Reifenfertigung aufgebrachten, elektrisch leitenden Suspension gebildet sein, wie sie etwa in der EP 3 103 661 B1 beschrieben ist. Anstelle eines elektrisch leitenden Hornprofils ist es beispielsweise möglich, an der Außenseite eines elektrisch nicht leitenden Hornprofils elektrisch leitendes Material vorzusehen, so wie es beispielsweise aus der DE 10 2015 225 150 A1 bekannt ist. Das elektrisch leitende Material ist dabei insbesondere ein Gummistreifen, ein Gewebe, ein Faden, eine aufgebrachte elektrisch leitende Paste bzw. eine leitende Suspension oder ein aufgebrachtes elektrisch leitendes Pulver oder Granulat.

Der Laufstreifen kann mehr als zwei Laufstreifenschichten aufweisen.

Es ist daher möglich, das Gummimaterial von einer bzw. mehreren Laufstreifenschicht(en) bzw. von Schichtteilen der Laufstreifenschichten, die Bandagengummierung, die Gürtelgummierung, die Karkassgummierung, das Gummimaterial der Seitenwände und das Gummimaterial der Hornprofile elektrisch nicht leitend auszuführen. Die diesen Gummimaterialien zugrundeliegenden Kautschukmischungen können daher vorteilhafterweise einen hohen Anteil an Kieselsäure als Füllstoff weisen, wodurch der Rollwiderstand des Reifens deutlich reduziert wird.

Der Ableitweg aus der Seitenwandpassage, dem elektrisch leitenden Element 14, dem randseitigen Schichtteil 1b" und dem bzw. den Laufstreifenelement(en) 13 ist in zumindest einer der Reifenhälften vorgesehen. Bevorzugt ist in jeder Reifenhälfte ein derartiger Ableitweg ausgebildet.

Im Rahmen der gegenständlichen Erfindung wird unter einem elektrisch leitenden Reifenbauteil bzw. einer elektrisch leitenden Seitenwandpassage, ein solcher bzw. eine solche verstanden, welcher bzw. welche einen spezifischen elektrischen Widerstand von ≤ 10⁸ Ohm˙cm aufweist.

### Bezugszeichenliste

- 1: Laufstreifen
- 1a: radial äußere Laufstreifenschicht
- 1b: radial innere Laufstreifenschicht
- 1b': Schichtteil
- 1b": randseitiger Schichtteil
- 2: Gürtelverband
- 2': Gürtelkante
- 2a: radial innere Gürtellage
- 2a': Randabschnitt
- 2b: radial äußere Gürtellage
- 3: Gürtelbandage
- 4: Seitenwand
- 4': radial äußerer Wandabschnitt
- 5: Wulstkern
- 6: Kernreiter
- 7: Karkasseinlage
- 7a: Karkasshochschlag
- 8: Innenschicht
- 9: Hornprofil
- 10: Umfangsrille
- 11: schulterseitige Profilrippe
- 11a: Schulterflanke
- 12: mittlere Profilrippe
- 13: elektrisch leitendes Laufstreifenelement
- 14: elektrisch leitendes Element
- A: Doppelpfeil (axiale Richtung)
- A-A: Linie (Reifenäquatorialebene)
- a₁: Abstand
- B: Breite

- b₁: maximale Breite
- L: Linie (seitlicher Rand der Bodenaufstandsfläche)
- R: Doppelpfeil (radiale Richtung)

## Patentansprüche

1. Fahrzeugluftreifen mit einem profilierten Laufstreifen (1), Gürtellagen (2a, 2b) mit einer elektrisch nicht leitenden Gürtelgummierung, einer Karkasseinlage (7) und Seitenwänden (4), welche aus elektrisch nicht leitendem Gummimaterial bestehen und jeweils einen zwischen die Karkasseinlage (7) und die radial innerste Gürtellage (2a) hineinragenden, radial äußeren Wandabschnitt (4') aufweisen,
- wobei der Laufstreifen (1) eine radial innerste Laufstreifenschicht (1b) und zumindest eine weitere Laufstreifenschicht (1a) aus elektrisch nicht leitendem Gummimaterial umfasst, wobei die weitere(n) Laufstreifenschicht(en) (1a) in radialer Richtung von zumindest einem zur Laufstreifenaußenfläche reichenden, elektrisch leitenden Laufstreifenelement (13) durchsetzt ist bzw. sind,
- wobei das elektrisch leitende Laufstreifenelement (13) über zumindest ein erstes elektrisch leitendes Element (1b") und zumindest ein das erste elektrisch leitende Element (1b") kontaktierendes, zweites elektrisch leitendes Element (14) mit einer elektrisch leitenden Seitenwandpassage (7, 9), welche bei auf einer Felge montiertem Fahrzeugluftreifen die Felge kontaktiert, in Verbindung steht,
- wobei das erste elektrisch leitende Element (1b") das elektrisch leitende Laufstreifenelement (13) kontaktiert und radial außerhalb der Gürtellagen (2a, 2b) sowie über die Gürtelkanten (2') verläuft und
- wobei das zweite elektrisch leitende Element (14) zwischen dem radial äußeren Wandabschnitt (4') der Seitenwand (4) und der radial innersten Gürtellage (2a) verläuft,
**dadurch gekennzeichnet,**
- **dass** das erste elektrisch leitende Element (1b") ein aus elektrisch leitendem Gummimaterial bestehender randseitiger Schichtteil (1b") der radial innersten Laufstreifenschicht (1b) ist.

2. Fahrzeugluftreifen nach Anspruch 1, **dadurch gekennzeichnet, dass** das elektrisch leitende Laufstreifenelement (13) zum nächstliegenden seitlichen Rand der Bodenaufstandsfläche (Linie L) einen auf die Laufstreifenperipherie bezogenen, in axialer Richtung ermittelten Abstand (a₁) von 10,0 mm bis 60,0 mm, insbesondere von 20,0 mm bis 40,0 mm, besonders bevorzugt von 25,0 mm bis 35,0 mm, aufweist.

3. Fahrzeugluftreifen nach Anspruch 1 oder 2, **dadurch gekennzeichnet, dass** der Laufstreifen (1) zumindest eine schulterseitige Profilrippe (11) aufweist, welche vom elektrisch leitenden Laufstreifenelement (13) durchsetzt ist.

4. Fahrzeugluftreifen nach Anspruch 3, **dadurch gekennzeichnet, dass** sich der randseitige Schichtteil (1b") der radial innersten Laufstreifenschicht (1b) ausschließlich im Bereich der schulterseitigen Profilrippe (11) befindet.

5. Fahrzeugluftreifen nach Anspruch 3 oder 4, **dadurch gekennzeichnet, dass** die schulterseitige Profilrippe (11) innerhalb der Bodenaufstandsfläche des Laufstreifens (1) eine in axialer Richtung ermittelte Breite (b₁) von 15% bis 25% der Breite (B) der Bodenaufstandsfläche des Laufstreifens (1) aufweist.

6. Fahrzeugluftreifen nach einem der Ansprüche 1 bis 5, **dadurch gekennzeichnet, dass** der randseitige Schichtteil (1b") der radial innersten Laufstreifenschicht (1b) in Richtung Reifenäquatorialebene (Linie A-A) am elektrisch leitenden Laufstreifenelement (13) bzw. an den elektrisch leitenden Laufstreifenelementen (13) endet.

7. Fahrzeugluftreifen nach einem der Ansprüche 1 bis 6, **dadurch gekennzeichnet, dass** sich die Profilierung des Laufstreifens (1) ausschließlich in der bzw. den weiteren Laufstreifenschicht(en) (1a) befindet.

8. Fahrzeugluftreifen nach einem der Ansprüche 1 bis 7, **dadurch gekennzeichnet, dass** das zweite elektrisch leitende Element (14) ein Gummistreifen ist.

9. Fahrzeugluftreifen nach einem der Ansprüche 1 bis 8, **dadurch gekennzeichnet, dass** der randseitige Schichtteil (1b") der radial innersten Laufstreifenschicht (1b) und das elektrisch leitende Laufstreifenelement (13) die einzigen elektrisch leitenden Teile des Laufstreifens (1) sind.

10. Fahrzeugluftreifen nach einem der Ansprüche 1 bis 9, **dadurch gekennzeichnet, dass** die elektrische leitende Seitenwandpassage aus einer elektrisch leitenden Karkassgummierung der Karkasseinlage (7) und einem elektrisch leitenden Hornprofil (9) gebildet ist.

11. Fahrzeugluftreifen nach einem der Ansprüche 1 bis 10, **dadurch gekennzeichnet, dass** er eine die Gürtellagen (2a, 2b) im Reifenquerschnitt randseitig überdeckende, elektrisch nicht leitende Gürtelbandage (3a) aufweist.

## Claims

1. Pneumatic vehicle tyre having a profiled tread (1), belt plies (2a, 2b) having an electrically non-conductive belt rubber coating, a carcass inlay (7) and sidewalls (4) which consist of electrically non-conductive rubber material and each have a radially outer wall section (4') which projects between the carcass inlay (7) and the radially innermost belt ply (2a),
- wherein the tread (1) comprises a radially innermost tread layer (1b) and at least one further tread layer (1a) composed of electrically non-conductive rubber material, wherein the further tread layer/layers (1a) is/are passed through in the radial direction by at least one electrically conductive tread element (13) reaching to the tread outer surface,
- wherein the electrically conductive tread element (13) is connected via at least one first electrically conductive element (1b") and at least one second electrically conductive element (14) making contact with the first electrically conductive element (1b") to an electrically conductive sidewall passage (7, 9) which makes contact with the rim when the pneumatic vehicle tyre is mounted on a rim,
- wherein the first electrically conductive element (1b") makes contact with the electrically conductive tread element (13) and runs radially outside the belt plies (2a, 2b) and over the belt edges (2'), and
- wherein the second electrically conductive element (14) runs between the radially outer wall section (4') of the sidewall (4) and the radially innermost belt ply (2a), **characterized in that**
- the first electrically conductive element (1b") is a peripheral layer part (1b"), consisting of electrically conductive rubber material, of the radially innermost tread layer (1b).

2. Pneumatic vehicle tyre according to Claim 1, **characterized in that** the electrically conductive tread element (13) is at a distance (a₁) of 10.0 mm to 60.0 mm, in particular of 20.0 mm to 40.0 mm, particularly preferably of 25.0 mm to 35.0 mm, based on the tread periphery and determined in the axial direction, from the closest lateral edge of the ground contact patch (line L).

3. Pneumatic vehicle tyre according to Claim 1 or 2, **characterized in that** the tread (1) has at least one shoulder-side profile rib (11), through which the electrically conductive tread element (13) passes.

4. Pneumatic vehicle tyre according to Claim 3, **characterized in that** the edge-side layer part (1b") of the radially innermost tread layer (1b) is located exclusively in the region of the shoulder-side profile rib (11).

5. Pneumatic vehicle tyre according to Claim 3 or 4, **characterized in that** the shoulder-side profile rib (11) has, within the ground contact patch of the tread (1), a width (b₁), determined in the axial direction, of 15% to 25% of the width (B) of the ground contact patch of the tread (1).

6. Pneumatic vehicle tyre according to one of Claims 1 to 5, **characterized in that** the edge-side layer part (1b") of the radially innermost tread layer (1b) ends at the electrically conductive tread element (13) or at the electrically conductive tread elements (13) in the direction of the tyre equatorial plane (line A-A).

7. Pneumatic vehicle tyre according to one of Claims 1 to 6, **characterized in that** the profiling of the tread (1) is located exclusively in the further tread layer/layers (1a).

8. Pneumatic vehicle tyre according to one of Claims 1 to 7, **characterized in that** the second electrically conductive element (14) is a rubber strip.

9. Pneumatic vehicle tyre according to one of Claims 1 to 8, **characterized in that** the edge-side layer part (1b") of the radially innermost tread layer (1b) and the electrically conductive tread element (13) are the only electrically conductive parts of the tread (1).

10. Pneumatic vehicle tyre according to one of Claims 1 to 9, **characterized in that** the electrically conductive sidewall passage is formed from an electrically conductive carcass rubber coating of the carcass inlay (7) and an electrically conductive flange profile (9).

11. Pneumatic vehicle tyre according to one of Claims 1 to 10, **characterized in that** it has an electrically non-conductive belt bandage (3a) which covers the belt plies (2a, 2b) at the edge in the tyre cross section.

## Revendications

1. Pneumatique de véhicule comprenant une bande de roulement profilée (1), des nappes de ceinture (2a, 2b) présentant un enrobage de caoutchouc de ceinture électriquement non conducteur, un insert de carcasse (7) et des flancs (4), qui sont constitués d'un matériau de caoutchouc électriquement non conducteur et présentent chacun une section de paroi radialement extérieure (4') faisant saillie entre l'insert de carcasse (7) et la nappe de ceinture radialement la plus intérieure (2a),
- dans lequel la bande de roulement (1) comprend une couche de bande de roulement radialement la plus intérieure (1b) et au moins une autre couche de bande de roulement (1a) constituée d'un matériau de caoutchouc électriquement non conducteur, dans lequel l'autre couche ou les autres couches de bande de roulement (1a) est ou sont traversées dans la direction radiale par au moins un élément de bande de roulement électriquement conducteur (13) s'étendant jusqu'à la surface extérieure de la bande de roulement,
- dans lequel l'élément de bande de roulement électriquement conducteur (13) est relié, par l'intermédiaire d'au moins un premier élément électriquement conducteur (1b") et d'au moins un deuxième élément électriquement conducteur (14) en contact avec le premier élément électriquement conducteur (1b"), à un passage de flanc électriquement conducteur (7, 9), qui est en contact avec la jante lorsque le pneumatique de véhicule est monté sur une jante,
- dans lequel le premier élément électriquement conducteur (1b") est en contact avec l'élément de bande de roulement électriquement conducteur (13) et s'étend radialement à l'extérieur des nappes de ceinture (2a, 2b) ainsi qu'au-delà des bords de ceinture (2'), et
- dans lequel le deuxième élément électriquement conducteur (14) s'étend entre la section de paroi radialement extérieure (4') du flanc (4) et la nappe de ceinture radialement la plus intérieure (2a),
**caractérisé**
- **en ce que** le premier élément électriquement conducteur (1b") est une partie de couche située du côté du bord (1b") de la couche de bande de roulement radialement la plus intérieure (1b), constituée d'un matériau de caoutchouc électriquement conducteur.

2. Pneumatique de véhicule selon la revendication 1, **caractérisé en ce que** l'élément de bande de roulement électriquement conducteur (13) présente, par rapport au bord latéral le plus proche de la surface de contact au sol (ligne L), une distance (a1) rapportée à la périphérie de la bande de roulement et déterminée dans la direction axiale de 10,0 mm à 60,0 mm, en particulier de 20,0 mm à 40,0 mm, de manière particulièrement préférée de 25,0 mm à 35,0 mm.

3. Pneumatique de véhicule selon la revendication 1 ou 2, **caractérisé en ce que** la bande de roulement (1) présente au moins une nervure de profil située du côté de l'épaulement (11), qui est traversée par l'élément de bande de roulement électriquement conducteur (13).

4. Pneumatique de véhicule selon la revendication 3, **caractérisé en ce que** la partie de couche située du côté du bord (1b") de la couche de bande de roulement radialement la plus intérieure (1b) se trouve exclusivement dans la zone de la nervure de profil située du côté de l'épaulement (11).

5. Pneumatique de véhicule selon la revendication 3 ou 4, **caractérisé en ce que** la nervure de profil située du côté de l'épaulement (11) présente, à l'intérieur de la surface de contact au sol de la bande de roulement (1), une largeur (b1) déterminée dans la direction axiale de 15% à 25% de la largeur (B) de la surface de contact au sol de la bande de roulement (1).

6. Pneumatique de véhicule selon l'une des revendications 1 à 5, **caractérisé en ce que** la partie de couche située du côté du bord (1b") de la couche de bande de roulement radialement la plus intérieure (1b) se termine, en direction du plan équatorial du pneumatique (ligne A-A), au niveau de l'élément de bande de roulement électriquement conducteur (13) ou des éléments de bande de roulement électriquement conducteurs (13).

7. Pneumatique de véhicule selon l'une des revendications 1 à 6, **caractérisé en ce que** le profil de la bande de roulement (1) se trouve exclusivement dans l'autre couche ou les autres couches de bande de roulement (1a).

8. Pneumatique de véhicule selon l'une des revendications 1 à 7, **caractérisé en ce que** le deuxième élément électriquement conducteur (14) est une bande de caoutchouc.

9. Pneumatique de véhicule selon l'une des revendications 1 à 8, **caractérisé en ce que** la partie de couche située du côté du bord (1b") de la couche de bande de roulement radialement la plus intérieure (1b) et l'élément de bande de roulement électriquement conducteur (13) sont les seules parties électriquement conductrices de la bande de roulement (1).

10. Pneumatique de véhicule selon l'une des revendications 1 à 9, **caractérisé en ce que** le passage de flanc électriquement conducteur est formé d'un enrobage de caoutchouc de carcasse électriquement conducteur de l'insert de carcasse (7) et d'un profil de talon électriquement conducteur (9).

11. Pneumatique de véhicule selon l'une des revendications 1 à 10, **caractérisé en ce qu'**il présente un bandage de ceinture électriquement non conducteur (3a) recouvrant les nappes de ceinture (2a, 2b) du côté des bords dans la section transversale du pneumatique.
